# EUROPÄISCHE PATENTSCHRIFT

(11) **EP 0 719 964 B1**
(45) Veröffentlichungstag und Bekanntmachung des Hinweises auf die Patenterteilung: **25.08.1999**
(21) Anmeldenummer: 95120643.2
(22) Anmeldetag: 28.12.1995
(51) Int. Cl.: F16H 57/02, F16H 57/08

(54) **Stirnräderplanetengetriebe**
Planetary spur gear transmission
Transmission planétaire à engrenages droits

(43) Veröffentlichungstag der Anmeldung: 03.07.1996
(73) Patentinhaber: Heidrich, Günther, 87545 Burgberg (DE)
(72) Erfinder: Heidrich, Günther, 87545 Burgberg (DE)
(74) Vertreter: Schieschke, Klaus, Dipl.-Ing.

(56) Entgegenhaltungen:
- WO-A-96/15393
- DE-A- 2 620 570
- DE-A- 4 216 397
- FR-A- 2 588 344
- US-A- 3 211 262

## Beschreibung

Die Erfindung bezieht sich auf ein Stinräderplanetengetriebe entsprechend den Merkmalen des Oberbegriffs der Ansprüche 1 und 9.

Es ist bekannt, bei Planetengetrieben der eingangs genannten Bauarten für den Ausgleich der axialen Zahnkräfte der Einfachschrägverzahnung und für die axiale Führung der Räder an beiden Verzahnungsenden des Sonnen- und Hohlrades Druckringe anzuordnen (DE-PS 15 75 007, DE-PS 21 10 252, DE-PS 26 20 570, DE-PS 33 11 310). Dabei ist es üblich, die Druckringe direkt an dem Hohlrad starr oder zur Erreichung des axialen Lastausgleiches radial beweglich zu befestigen (DE-PS 21 10 252).

Außerdem ist es bekannt, den als rotierendes Glied der langsamlaufenden Getriebeseite wirkenden Planetenträger (DE-PS 26 20 570) bzw. das Hohlrad (DE-PS 33 11 310) als starre Baueinheit auszubilden; das zur Radsatzmitte weisende Ende wird hierbei für das Erreichen des Lastausgleiches in den Verzahnungen radial beweglich geführt, wohingegen das entgegengesetzte Ende eine in nur einem Lager radial und axial unbewegliche Führung aufweist.

Bekannt ist es darüber hinaus auch, das feststehende Getriebeglied als starre Baueinheit auszubilden (DE-PS 26 20 570) und mit dem Gehäuse starr zu verbinden.

Als bekannt gilt auch, den Planetenrad-Lagerbolzen einseitig eingespannt als Freiträger im Planetenträger zu halten (DE-PS 26 20 570).

Bei diesen bekannten Ausführungen ist der Aufwand für die Herstellung der beidseitig der Verzahnungen an dem Sonnen- und Hohlrad befestigten Druckringe und auch für die dafür notwendigen Befestigungseinrichtungen am Sonnen- und Hohlrad sehr groß. Außerdem erfordern diese Teile höchste Herstellungspräzision.

Diese Aufwendungen erhöhen nachteilig bei den bekannten Bauarten den Getriebepreis. Außerdem besitzen die bekannten Bauarten auch Nachteile bezüglich ihrer Montage, Demontage und Inspektion. So ist es beispielsweise nicht möglich, durch die Befestigung der beiderseits der Verzahnungen direkt an dem Sonnen- und Hohlrad angeordneten Druckringe ohne den nachteiligen Ausbau von Teilen oder des ganzen Getriebes eine gründliche Inspektion der Getriebeteile durchzuführen.

Die optische Kontrolle aller Verzahnungen, Druckringlaufflächen und Planetenradlager wird hier nur ermöglicht, wenn die Druckringe und weitere Teile ausgebaut werden. Dieser Druckringausbau ist jedoch bei den bekannten Getrieben sehr kompliziert und kostenintensiv. Analog dazu gestaltet sich auch nachteilig die Montage und Demontage von einzelnen Teilen oder des ganzen Getriebes.

Diese bei der Montage und Inspektion vorhandenen Schwierigkeiten belasten nachteiligerweise die herkömmlichen Planetengetriebe gegenüber den konventionellen Stirnradgetrieben, bei welchen zum Beispiel der Zugang zu den Verzahnungen und Lagerstellen ohne Radsatzdemontage möglich ist.

Die für die Erreichung des axialen Lastausgleiches bekannten Ausführungen sind ebenfalls mit Nachteilen behaftet. So ist die Ausführung für die Druckringgeometrie mit zwei konischen Berührflächen und radialer Bewegungsmöglichkeit der Druckringe (DE-PS 21 10 252) sehr aufwendig und bezüglich Funktions- und Betriebssicherheit auch sehr umstritten.

Die Ausführung für die Druckringgeometrie plan/ballig mit Planflächen an den Planetenrädern (DE-PS 26 205 750) macht es außerdem notwendig, die balligen Laufflächen ausschließlich an den Druckringen vorzusehen. Es führt jedoch zu fertigungstechnischen Schwierigkeiten bei der Herstellung der Balligkeit, da es zur Vermeidung von Axialschwingungen notwendig ist, erst nach beendeter Befestigung der Druckringe an dem Sonnen- und Hohlrad die Balligkeit herzustellen.

Die Aufgabe der vorliegenden Erfindung besteht demgegenüber darin, Stirnräderplanetengetriebe der eingangs genannten Art so auszubilden, daß bei vereinfachter Bauart die Effektivität erhöht wird, sowohl technisch als auch ökonomisch. Hierbei soll die Erfindung auch anwendbar sein bei Stirnräderplanetengetrieben mit feststehendem Sonnenrad.

Diese Aufgabe wird erfindungsgemäß durch die Merkmale der Ansprüche 1 bzw. 9 gelöst.

Die erfindungsgemäße Lösung führt zu einer besonders einfachen Ausbildung des Getriebes insbesondere dadurch, daß jeweils nur an einem Verzahnungsende des Sonnen- und Hohlrades ein Druckring für den Ausgleich der axialen Zahnkräfte und für die axiale Radsatzführung angeordnet ist, vorgesehen für den Betrieb des Getriebes in jeweils nur einer Antriebsdrehrichtung. Der Antrieb kann dabei entweder an der schnellen oder an der langsamen Getriebeseite erfolgen.

Die daraus resultierende Einsparung von zwei hochwertigen Druckringen und demzufolge auch von aufwendigen Einrichtungen für deren Befestigung am Sonnenrad und am Hohlrad ergibt erhebliche Kosteneinsparungen. Die Beschränkung auf jeweils nur eine Drehrichtung ist dabei kein Nachteil, da bekanntlich beispielsweise eine große Zahl von Industriegetrieben nur in einer Drehrichtung betrieben werden.

Für den Fall, daß sich während der kurzen Auslaufzeit des Getriebes die Räder entgegengesetzt zu der Schubrichtung bei Lastbetrieb verschieben, erfolgt die Wegbegrenzung durch zum Teil bereits vorhandene oder zu ergänzende einfache Bauteile, geeignet zur Aufnahme von Axialkräften. Bei den einzelnen Bauarten sind dies:
a) Bei feststehendem Planetenträger für das Hohlrad das vorhandene Radial-Axiallager der langsam laufenden Welle und für das Sonnenrad ein zu ergänzender Lagerring.
b) Bei feststehendem Hohlrad für dieses das vorhandene Gehäuse und für das Sonnenrad ein zu ergänzender Lagerring.
c) Bei feststehendem Sonnenrad für dieses das vorhandene Gehäuse und für das Hohlrad eine zu ergänzende Anlauffläche an dem vorhandenen Radiallager der schnell laufenden Welle.

Der eine am Hohlrad verbleibende Druckring ist erfindungsgemäß an der Hohlradseite mit dem hülsenartigen Fortsatz zur Drehmoment-Weiterleitung angeordnet; der einzige Druckring des Sonnenrades liegt entsprechend diagonal gegenüber.

Des weiteren sind erfindungsgemäß das Hohlrad und dessen Druckring separat an das gemeinsame Anbauteil starr befestigt.

Der Wegfall von zwei Druckringen und die separate Befestigung von Hohlrad und Druckring ermöglichen neben der Bauartvereinfachung und der Kostenreduzierung auch eine unkomplizierte Getriebeinspektion ohne den Ausbau von Teilen. Es ist lediglich erforderlich, die Hohlradbefestigung zu lösen und dieses Rad soweit in der Verzahnung axial zu verschieben, bis eine vollkommene optische Betrachtung aller Verzahnungen und Druckringlaufflächen gegeben ist.

Auch die Getriebemontage und der Ausbau einzelner Bauteile bei eingebautem Getriebe vereinfacht sich durch das Verschieben des Hohlrades ganz erheblich.

Die Erfindung betrifft darüber hinaus eine Verbesserung des radialen Lastausgleichs. Hierbei handelt es sich insbesondere um das rotierende Glied der langsam laufenden Getriebeseite, welches eine starre Baueinheit bildet und dessen zur Radsatzmitte weisendes Ende zur Erreichung des radialen Lastausgleiches in den Verzahnungen beweglich geführt ist, wohingegen sein entgegengesetzes Ende nur eine radial und axial unbewegliche Führung in einem Lager aufweist.

Zur Vermeidung einer ungünstigen radialen Belastung bei Stillstand, Leerlauf und Lastbetrieb wird erfindungsgemäß vorgeschlagen, die Schwerpunktabstände der beiderseits des einen Lagers angeordneten Massen (Kupplung mit Welle einerseits und zur Radsatzmitte weisendes Teilstück andererseits) so zu wählen, daß die beiden daraus sich ergebenden, entgegengesetzt wirkenden Momente (Drehzwilling) gleichgroß sind.

Für den axialen Lastausgleich wird erfindungsgemäß vorgeschlagen, den hülsenartigen Bereich des Hohlrad-Druckringes durch wellenartige Ausnehmungen axial elastisch zu gestalten. Die damit verbundene elastische Einfederung durch die axialen Zahnkräfte eliminiert Längenunterschiede zwischen den einzelnen Planetenrädern, so daß dadurch ein gleichmäßiger Ausgleich der Axialkräfte auch bei mehr als drei Planetenrädern zustandekommt.

Außerdem erreicht man bei der Druckringgeometrie mit zwei konischen Berührflächen durch die Elastizität auch eine Winkelanpassung bei nicht absolut gleicher Neigung der Berührflächen Von Druckring und jeweiligem Planetenrad. Hierdurch werden Kantenpressung und damit Überlastungen an den Berührstellen vermieden.

Durch das erfindungsgemäße Merkmal der elastischen Eigenschaft des Hohlrad-Druckringes ist es möglich, sowohl die Druckringgeometrie konisch/konisch als auch plan/ballig zu verwenden, wobei bei letzterer die Balligkeit nunmehr mit Vorteilen für deren leichtere Herstellung an den Planetenrädern vorgesehen werden kann.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: ein Stirnräderplanetengetriebe im Längsschnitt mit feststehendem Hohlrad, für eine Antriebsdrehrichtung;
- Fig. 2: ein Stirnräderplanetengetriebe im Längsschnitt mit feststehendem Planetenträger für eine Antriebsdrehrichtung;
- Fig. 3: ein Stinräderplanetengetriebe im Längsschnitt, mit feststehendem Sonnenrad, für eine Antriebsdrehrichtung;
- Fig. 4: ein Stirnräderplanetengetriebe nach Fig. 1, mit den erfindungsgemäßen Maßnahmen für eine einfache Inspektion, wobei die obere Hälfte im Längsschnitt dargestellt ist;
- Fig. 5: ein Stirnräderplanetengetriebe nach Fig. 3 mit den erfindungsgemäßen Maßnahmen für eine einfache Inspektion, wobei die obere Hälfte im Längsschnitt dargestellt ist.
- Fig. 6: ein Stirnräderplanetengetriebe nach Fig. 2 mit den erfindungsgemäßen Maßnahmen für eine Demontage, wobei die obere Hälfte im Längsschnitt dargestellt ist;
- Fig. 7: die bei den Stirnräderplanetengetrieben nach Fig. 1 bis 3 erfindungsgemäß vorgesehene getrennte Befestigung des Hohlrades und Druckringes an das gemeinsame Anbauteil;
- Fig. 8: die erfindungsgemäß vorgesehene axial elastische Ausbildung des Hohlrad-Druckringes für den axialen Lastausgleich in unbelastetem Zustand;
- Fig. 9: die axial elastische Ausbildung des Hohlrad-Druckringes nach Fig. 8 in belastetem Zustand;
- Fig. 10: den Sonnenrad-Druckring mit konisch/konischer Berührflächengeometrie;
- Fig. 11: den Sonnenrad-Druckring alternativ zu Fig. 10 mit plan/balliger Berührflächengeometrie;
- Fig. 12: ein Stirnräderplanetengetriebe im Längsschnitt mit feststehendem Planetenträger, für beide Antriebsdrehrichtungen;

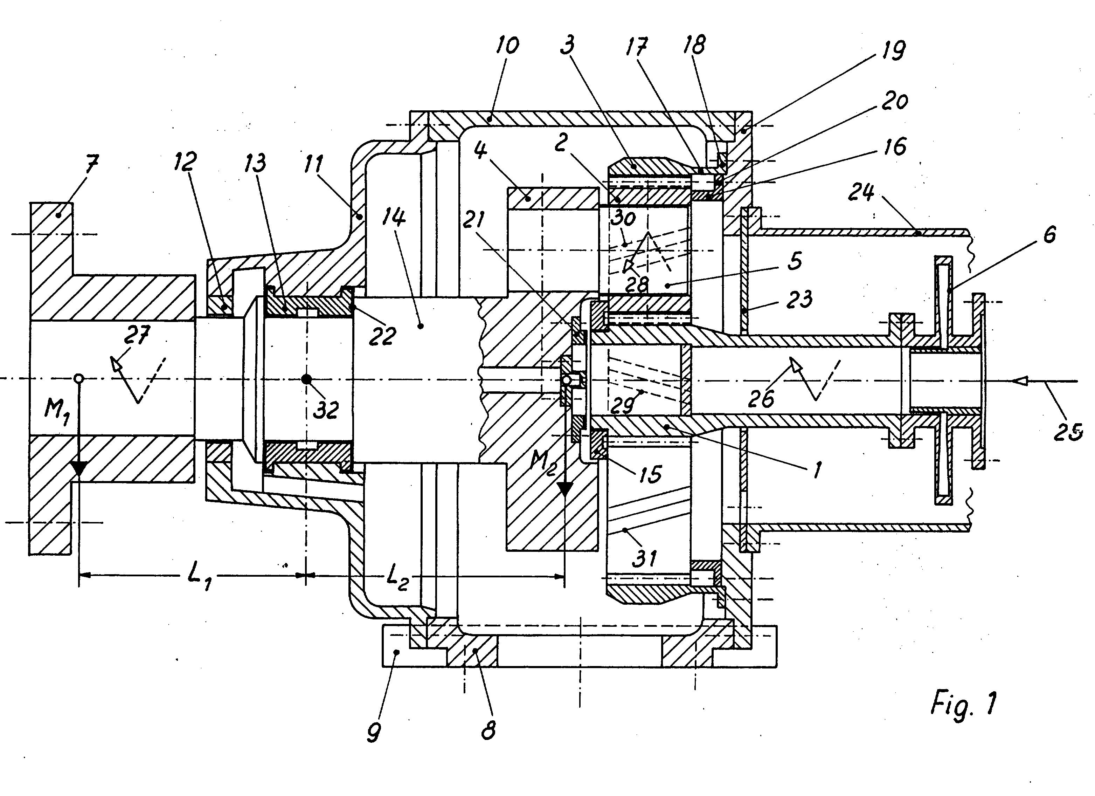

In den Figuren 1 bis 3 und 12 ist jeweils eine Bauform eines Stirnräderplanetengetriebes mit Einfachschrägverzahnung gemäß der Erfindung dargestellt, bestehend im wesentlichen aus einem Sonnenrad 1, Planetenrädern 2 und einem Hohlrad 3. Die Planetenräder 2 sind auf einseitig als Freiträger in einem Planetenträger 4 eingespannten Lagerbolzen 5 gelagert. An den beiden Wellenanschlüssen des Getriebes befinden sich flexible Kupplungen 6 und 7 für den Ausgleich von axialen, radialen und winkligem Wellenversatz.

Die Kupplung 6 an der schnellen Getriebeseite ist erfindungsgemäß eine Doppelmembrankupplung. Neben den allgemeinen Vorteilen von Membrankupplungen - u.a. Schmierungs- und Wartungsfreiheit, hohe Laufpräzision und Spielfreiheit der Teile untereinander, Auswuchtung der Kupplung mit den anderen Teilen der schnell laufenden Getriebeseite als starre Wuchteinheit - zeichnet sich die dargestellte Kupplungsbauart vor allem aus durch die große Elastizität und die kleine Masse des mittels Elektronenstrahlschweißung verbundenen Doppelmembranelements sowie durch die Fähigkeit große Drehmomente und höchste Drehzahlen optimal zu übertragen.

Das Getriebegehäuse besteht aus einer unteren Gehäusehälfte 8 mit Befestigungsfüßen 9 und einer oberen Gehäusehälfte 10. Abgeschlossen wird es an der langsamen Getriebeseite durch einen ebenfalls zweiteiligen Gehäusedeckel 11. Neben einer Wellenabdichtung 12 befindet sich in dem Gehäusedeckel 11 auch ein zweiteiliges Radial-/Axiallager 13 einer langsam laufenden Welle 14.

Gemäß der Erfindung zeigen die Figuren 1, 2 und 3 die Anordnung von jeweils einem Druckring 15, 16 an den Verzahnungsenden des Sonnenrades 1 und des Hohlrades 3. Diese Druckringe 15, 16 sind in der Lage, bei Betrieb des Getriebes in einer Antriebsdrehrichtung die dabei auftretenden axialen Zahnkräfte an den Berührungsstellen mit den Planetenrädern 2 mittels einer besonderen Geometrie dieser Berührungsflächen durch Wälzvorgang reibungsarm auszugleichen.

Es entfallen dadurch die sonst üblichen Axiallager und Kippmomente an den Planetenrädern.

Als Eigenheit ist bei der Bauart nach Fig. 1 das Hohlrad 3 feststehend; über einen hülsenartigen Fortsatz 17 und einen Flansch 18 ist hierbei das Hohlrad 3 mit der zweiteiligen Gehäusewand 19 starr verbunden. Der ebenfalls feststehende Druckring 16 ist erfindungsgemäß mit seinem Flansch 20 separat zum Hohlrad 3 ebenfalls an der Gehäusewand 19 starr befestigt.

Erfindungsgemäß befindet sich der Druckring 15 diagonal gegenüber des Druckringes 16 an der anderen Seite des Planetenrades 2 und ist über spezielle Befestigungsarten, beispielsweise mittels Gewinde, an dem Sonnenrad 1 befestigt.

Die axiale Führung der Planetenräder 2 und des Sonnenrades 1 erfolgt bei Betriebsdrehrichtung durch die Druckringe 15 und 16. Für den Fall, daß nach dem Abschalten der Anlage während der kurzen Auflaufzeit geringe Gegenschübe an den Rädern 1, 2 und 3 auftreten, werden diese am Hohlrad 3 an der Befestigungsstelle der Teile 18, 19 und am Sonnenrad 1 über einen Lagerring 21 an einer axialen Lagerfläche 22 eines Lagers 13 aufgenommen.

Der Planetenträger 4 bildet mit der langsam laufenden Welle 14 ein gemeinsames, vereinfachtes Teil. Gegenüber den üblichen Planetenträgerkonstruktionen als Käfig mit zwei Seitenscheiben und Verbindungsstegen zwischen den Planetenrädern ergeben sich dadurch beachtliche Einsparungen an Herstellungskosten. Wirkungsgraderhöhungen durch kleinere Öl-Planschverluste sind ein weiterer Vorteil.

An der schnell laufenden Seite befinden sich an der Gehäusewand 19 zur Ölabschirmung eine Scheibe 23 und eine Verschalung 24, beide in zweiteiliger Ausführung.

Die erfindungsgemäße Beschränkung auf eine Antriebsdrehrichtung sowie die besondere Ortszuordnung der Druckringe 15 und 16 erfordern eine Abstimmung der Schrägungsrichtung bei der Einfachschrägverzahnung. So zeigt als Beispiel Fig. 1 in der Betrachtungsrichtung (Pfeil 25) ein im Rechtsdrehsinn (Pfeil 26) angetriebenes Sonnenrad 1 und gemäß dem feststehenden Hohlrad 3 eine ebenfalls rechtsdrehende Abtriebswelle 14 (Pfeil 27) sowie linksdrehende Planetenräder 2 (Pfeil 28). Für die Übertragung des Drehmoments ist es dadurch notwendig, die Verzahnung 29 des Sonnenrades 1 linksgängig vorzusehen. In Abstimmung dazu erhält die Verzahnung 30 der Planetenräder 2 und die Verzahnung 31 des Hohlrades 3 Rechtsgängigkeit. Ist die Antriebsdrehdrichtung 26 jedoch entgegengesetzt im Linksdrehsinn, so sind auch entsprechend dazu die Schrägungsrichtungen der Verzahnungen 29, 30, 31 entgegengesetzt auszuführen. Ebenso entgegengesetzt zu den Schrägungsrichtungen bei Rechtsdrehsinn (Pfeile 26, 27, 28) sind die Schrägungsrichtungen dann vorzusehen, wenn das Getriebe nicht von der schnellen Seite (über Kupplungen 6), sondern von der langsamen Seite (über Kupplungen 7) im Drehsinn des Pfeiles 27 angetrieben wird.

Für die Erreichung des radialen Lastausgleichs ist das Sonnenrad 1 in an sich bekannter Weise ungelagert und in den Verzahnungen der Planetenräder 2 radial beweglich geführt. Des weiteren bildet das feststehende Hohlrad 3 durch die an diesem stattfindende, ebenfalls radial bewegliche Zentrierung der Planetenräder 2 die eine Lagerstelle der langsam laufenden Welle 14. Diese stellt mit dem Planetenträger 4 und den Lagerbolzen 5 eine starre Baueinheit dar.

Die andere Lagerstelle ist das Lager 13. Zur Vermeidung einer ungünstigen radialen Belastung der Verzahnungen des Radsatzes im Stillstand und beim Anfahren wird vorgeschlagen, die Schwerpunktabstände L₁ und L₂ der beiderseits des Lagers 13 angeordneten Massen M₁ und M₂ so zu wählen, daß sich die Baueinheit der Teile 7, 14, 4 und 5 annähernd im Gleichgewicht um einen Drehpunkt 32 befindet. Die Masse M₁ beinhaltet auch den Massenanteil der halben flexiblen Wellenkupplung 7. Das Erreichen des Gleichgewichtszustandes kann auch durch Versetzen des Lagers 13 (z.B. in Richtung Getriebeinneres) und folglich des Drehpunktes 32 oder durch Abstimmung der beiden Massen M₁ und M₂ vorgenommen werden.

Die beim Anfahren der Anlage durch die Beschleunigung der Drehmassen entstehenden radialen Zahnkräfte sind demzufolge bereits in einer sehr kleinen Größe in der Lage, die Räder des Radsatzes zu zentrieren. Damit vermeidet man den bisher bei derartigen Planetengetrieben mit radial einstellbaren Rädern als nachteilig empfundenen unruhigen Lauf während des Anfahrvorganges.

Durch das Gleichgewicht der Baueinheit der langsamen Getriebeseite ergibt sich für den radialen Lastausgleich auch bei Lastbetrieb ein wichtiger Vorteil. So sind bei den Ausgleichsbewegungen des inneren Endes dieser Baueinheit die Massenkräfte dadurch auf ein Minimum reduziert und diese Teile in der Lage, bis zu den höchsten Drehzahlen bei niedrigen dynamischen Zahnbelastungen den Zentrierbewegungen zu folgen.

Das Hohlrad 3 ist - wie an sich bekannt - radial elastisch dimensioniert, so daß der gleichmäßige radiale Lastausgleich weiter verbessert und die Anordnung von mehr als drei Planetenrädern 2 ermöglicht wird.

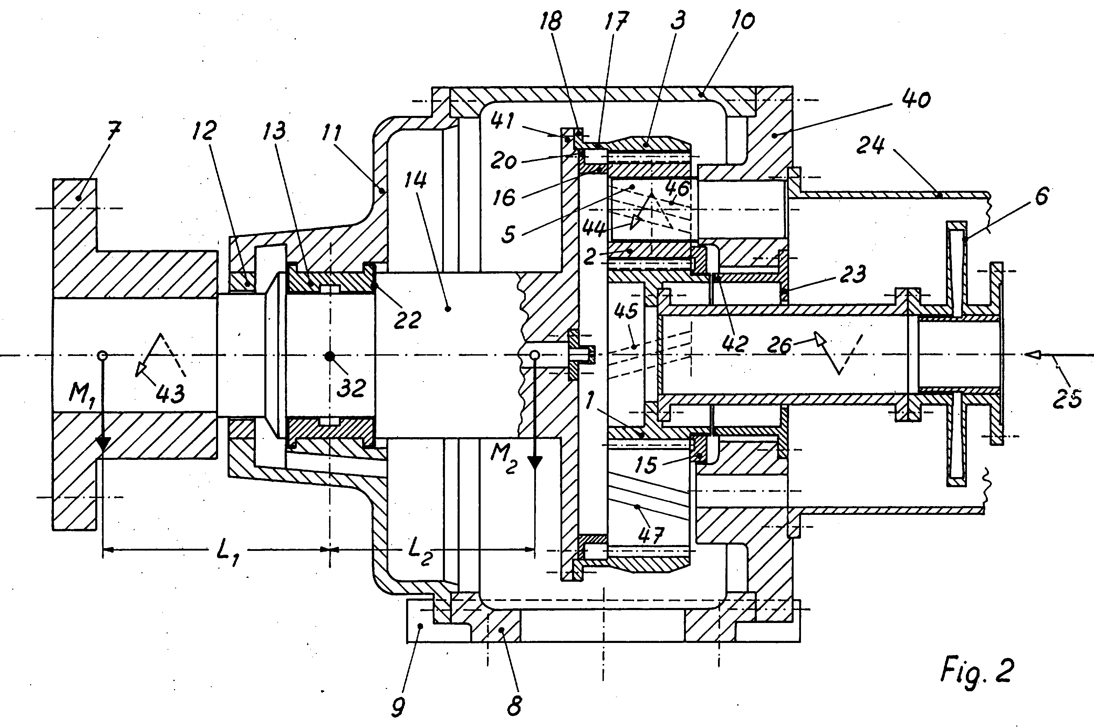

Als weitere Ausgestaltung der Erfindung zeigt Fig. 2 ein Stirnräderplanetengetriebe der Bauart mit feststehendem Planetenträger 40, ebenfalls in einfacher Bauweise, wobei dieser Planetenträger 40 gleichzeitig als Gehäusewand wirkt. Das sich drehende Hohlrad 3 ist über den hülsenartigen Fortsatz 17 und den Flansch 18 zur Weiterleitung des Drehmomentes mit einem Flansch 41 der langsam laufenden Welle 14 starr verbunden. Gemäß der Erfindung befindet sich an dieser Seite des Hohlrades 3 der Druckring 16. Dieser ist durch seinen Flansch 20, wiederum separat zum Hohlrad 3 an den gemeinsamen Wellenflansch 41 befestigt.

Diagonal gegenüber des Druckringes 16 ist am Sonnenrad 1 der Druckring 15 angebracht. Für den Fall des geringen Gegenschubes während der Auslaufperiode des Getriebes wird der Schub des Hohlrades 3 an der axialen Lagerfläche 22 des Lagers 13 und der des Sonnenrades 1 an einem Lagerring 42 der Scheibe 23 aufgenommen.

Im dargestellten Anwendungsfall wird wiederum das Sonnenrad 1 im Rechtsdrehsinn (Pfeil 26) angetrieben. Die langsam laufende Abtriebswelle 14 dreht gemäß dem feststehendem Planetenträger 40 entgegengesetzt links (Pfeil 43), ebenso wie die Planetenräder 2 (Pfeil 44). Als Schrägungsrichtung für die Verzahnungen ergeben sich demzufolge: Sonnenrad 1 - rechtsgängig (45), Planetenräder 2 und Hohlrad 3 - linksgängig (46 und 47).

Der radiale Lastausgleich ist ähnlich wie bei der Konstruktion nach Fig. 1, jedoch mit dem Unterschied, daß hier der Planetenträger 40 das feststehende Getriebeglied bildet und somit an dessen Planetenrädern 2 die Abstützung der radial beweglichen Sonnen- und Hohlräder 1 und 3 erfolgt. Analog zu der Bauform nach Fig. 1 wird durch das Gleichgewicht der starren Baueinheit der Teile 7, 14, 41, 3 und 16 eine Verbesserung des radialen Lastausgleichs auch bei dieser Bauart gemäß der Erfindung erreicht.

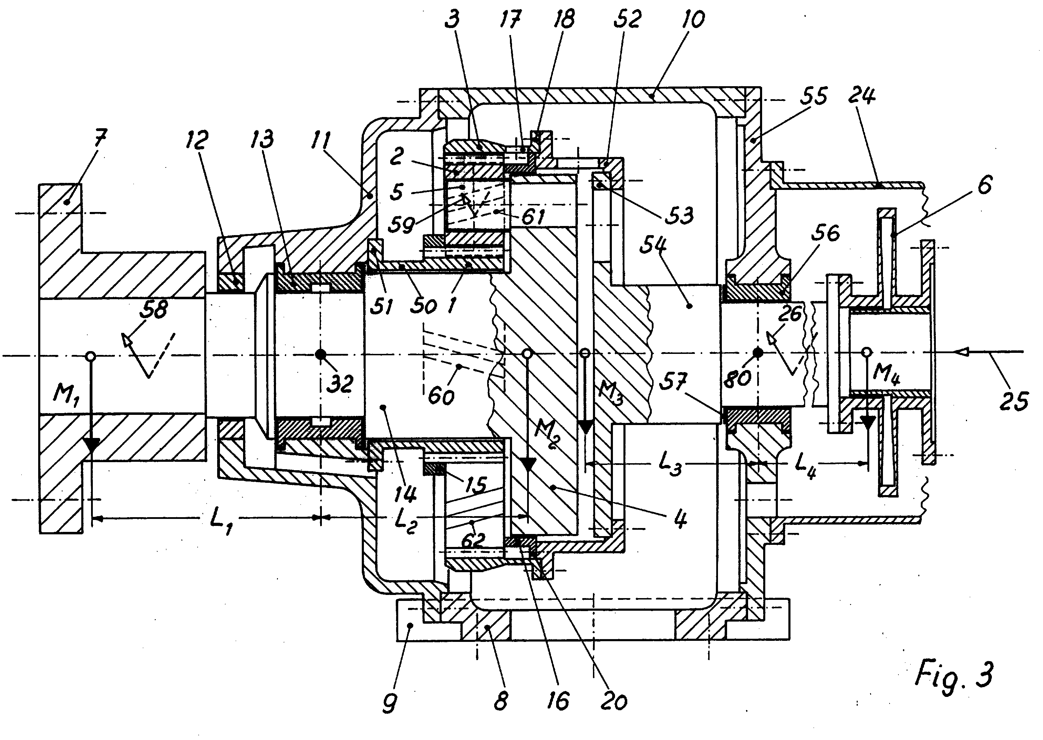

Fig. 3 zeigt eine weitere Ausführungsmöglichkeit der Erfindung. Bei dieser Konstruktion ist als feststehendes Getriebeglied das Sonnenrad 1 vorgesehen, welches über einen hülsenartigen Fortsatz 50 und einen Flansch 51 mit dem Gehäusedeckel 11 starr verbunden ist. Diese Bauart ermöglicht sehr kleine Übersetzungen, beispielsweise < 1,8. Das sich drehende Hohlrad 3 ist über den hülsenartigen Fortsatz 17 und den Flansch 18 zur Weiterleitung des Drehmomentes über die Zwischenhülse 52 mit dem Flansch 53 der schnell laufenden Welle 54 starr verbunden. Die Befestigung des Hohlrades 3 und der Druckringe 16 erfolgt wiederum erfindungsgemäß separat an dem gemeinsamen Anbauteil, nämlich der Zwischenhülse 52. Diagonal gegenüber dem Druckring 16 ist am Sonnenrad 1 der Druckring 15 in bekannter Weise am Verzahnungskopfkreis mit axialer Arretierung angebracht.

Die an der schnell laufenden Seite zweiteilig vorgesehene Gehäusewand 55 besitzt ein Lager 56 der schnell laufenden Welle 54, welche mit den Teilen 6, 53, 52, 3 und 16 eine starre Baueinheit bildet. Die Abstützung des eventuellen Gegenschubes während des Getriebeauslaufs übernimmt beim Hohlrad 3 die axiale Lagerfläche 57 des Lagers 56 und beim feststehenden Sonnenrad 1 der Gehäusedeckel 11.

Die Antriebsdrehrichtung (Pfeil 26) ist wiederum in Blickrichtung (Pfeil 25) als Beispiel rechts angenommen. Die langsam laufende Abtriebswelle 14 dreht bedingt durch das feststehende Sonnenrad 1 im gleichen Rechtsdrehsinn (Pfeil 58) ebenso wie die Planetenräder 2 (Pfeil 59). Als Schrägungsrichtung für die Verzahnungen ergeben sich demzufolge: Sonnenrad 1, Verzahnung 60 linksgängig, Planetenräder 2 und Hohlrad 3, rechtsgängig (Verzahnung 61 und 62).

Der radiale Lastenausgleich erfolgt durch radial bewegliche Abstützung des Planetenträgers 4 über dessen Planetenräder 2 an dem feststehendem Sonnenrad 1 und durch das Hohlrad 3 mit den Planetenrädern 2 als Zwischenglied. Die erfindungsgemäßen Merkmale für die Erreichung eines Gleichgewichts der starren Baueinheit der langsamen Getriebeseite (Teile 7, 14, 4 und 5) sind sinngemäß auch für die starre Baueinheit der schnellen Getriebeseite (Teile 6, 54, 53 3 und 16) anwendbar.

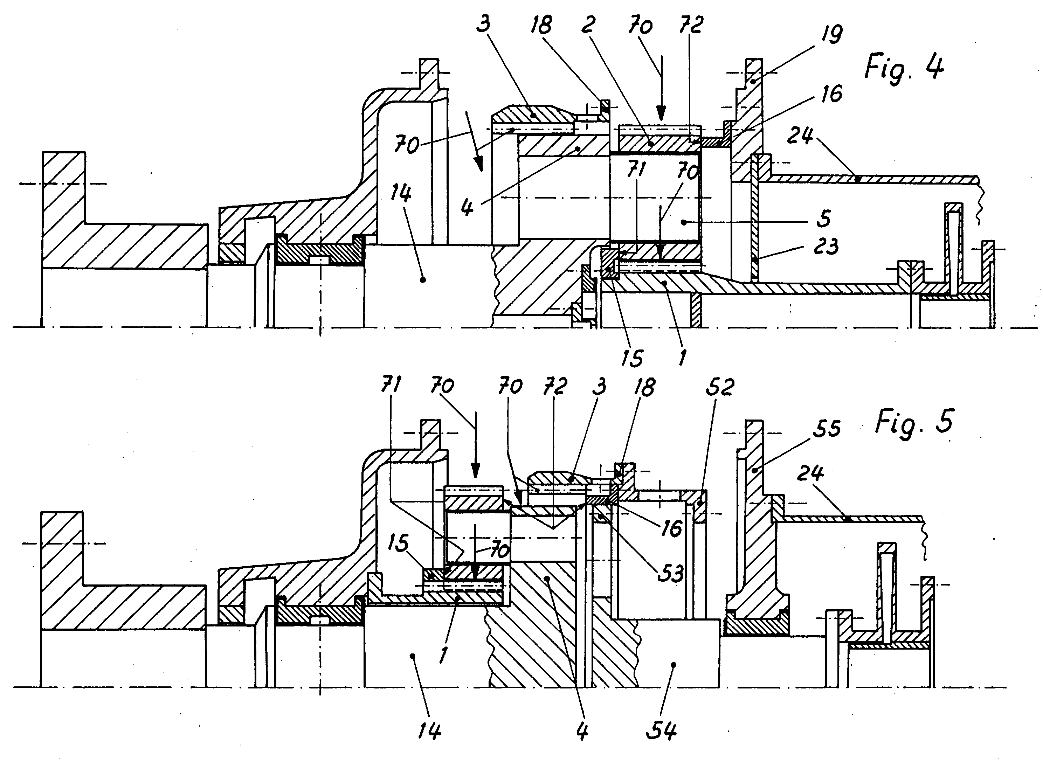

Fig. 4 zeigt als Beispiel für die Bauart der Konstruktion nach Fig. 1 eine einfache Inspektionsmöglichkeit der Verzahnungen der Räder 1, 2 und 3 sowie der Berührflächen mit den Druckringen 15 und 16. Erreicht wird diese einfache Inspektion in erster Linie erfindungsgemäß durch die separate Befestigung des Hohlrades 3 mit seinem Flansch 18 an der Gehäusewand 19. Nach dem Lösen nur dieser Befestigung ist es möglich, das Hohlrad 3 so in axiale Positionen zu verschieben, daß eine optimale optische Betrachtung der jeweiligen Kontrollstelle durchgeführt werden kann.

Außer der oberen Gehäusehälfte 10 ist es erfindungsgemäß nicht erforderlich, andere Getriebeteile auszubauen. Die einfache Bauweise des Planetenträgers erleichtert zusätzlich diese Inspektion durch das Fehlen der zweiten Seitenwand und der Querstege.

Die dargestellten Pfeile 70 zeigen die Blickrichtung für die Betrachtung der Verzahnungen der Räder 1, 2 und 3.

Auch die Druckringlaufflächen sind optisch kontrollierbar (Pfeile 71, 72). Für den Fall der Inspektion der Planetenrad-Lagerbolzen 5 ist es notwendig, das jeweilige Planetenrad axial zu verschieben. Dies kann bei eingeschränktem Schiebeweg nach dem Lösen der Befestigung des Druckringes 16 von der Gehäusewand 19 und nach dem radialen Anheben des Druckringes 16 erfolgen bzw. bei nicht eingeschränktem Schiebeweg durch den weiteren Ausbau der oberen Hälften der Teile 19, 23 und 24.

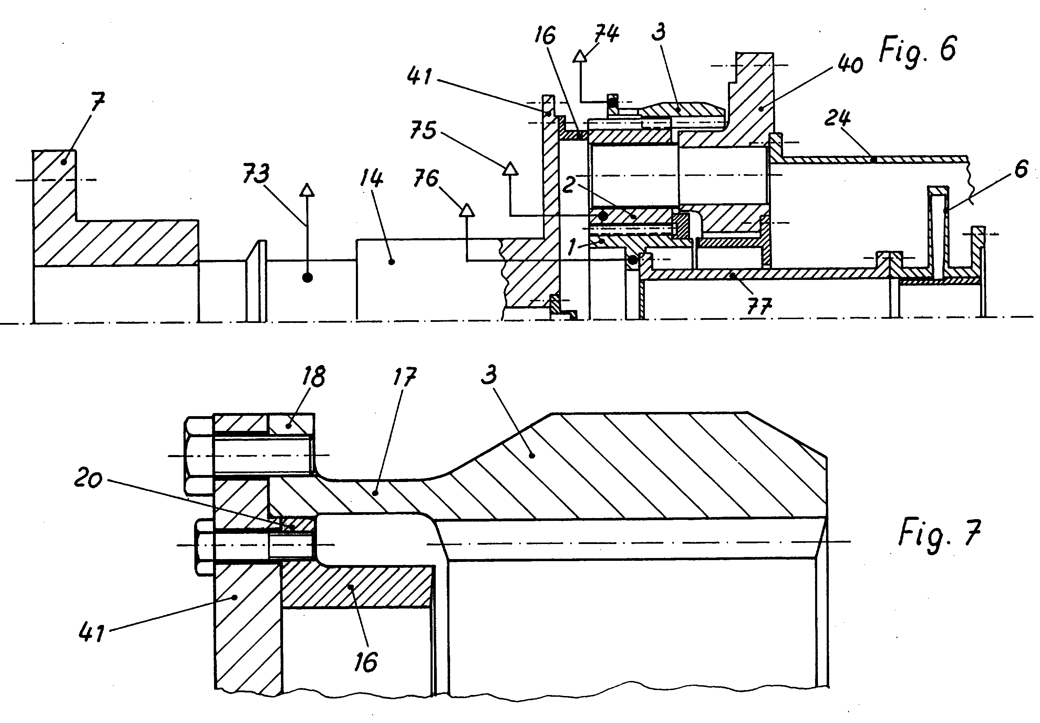

Fig. 5 zeigt als weiteres Beispiel für die Bauart nach Fig. 3 eine Inspektionsmöglichkeit ähnlich wie nach Fig. 4. Als Vereinfachung, wiederum ohne den Ausbau von Teilen (Ausnahme lediglich Ausbau oberer Gehäusehälfte 10), kann hierdurch die erfindungsgemäße Anordnung der Zwischenhülse 52, das axiale Verschieben der montierten Teile 3, 16 und 52 nur durch Lösen der Verbindung der Zwischenhülse 52 mit dem Flansch 53 vorgenommen werden.

Fig. 6 zeigt als Beispiel für die Bauart nach Fig. 2 die einfache Demontage der einzelnen Bauteile bzw. deren Montage bei umgekehrten Arbeitsablauf. Die dargestellten Pfeile 73, 74, 75 und 76 zeigen für die auszubauenden Bauteile die notwendigen Verschiebebewegungen. Die Reihenfolge der Demontage ist folgende:
1. Langsam laufende Baueinheit der Teile 7, 14, 41 und 16 gemäß Pfeil 73,
2. Hohlrad 3 gemäß Pfeil 74,
3. Planetenräder 2 gemäß Pfeil 75,
4. Sonnenrad 1 gemäß Pfeil 76 nach Trennung der Zwischenhülse 77 von der Kupplung 6.

Zu der in den Figuren 4, 5 und 6 dargestellten einfachen Inspektion und Demontage ist allgemein darauf hinzuweisen, daß alle beschriebenen Maßnahmen direkt an der Maschinenanlage und bei eingebautem, am Anlagenfundament befindlichen Getriebe ausgeführt werden können. Bezüglich dieser Kriterien sind die Nachteile der herkömmlichen Planetengetriebe gegenüber den Stirnrädergetrieben beim Gegenstand der Erfindung beseitigt.

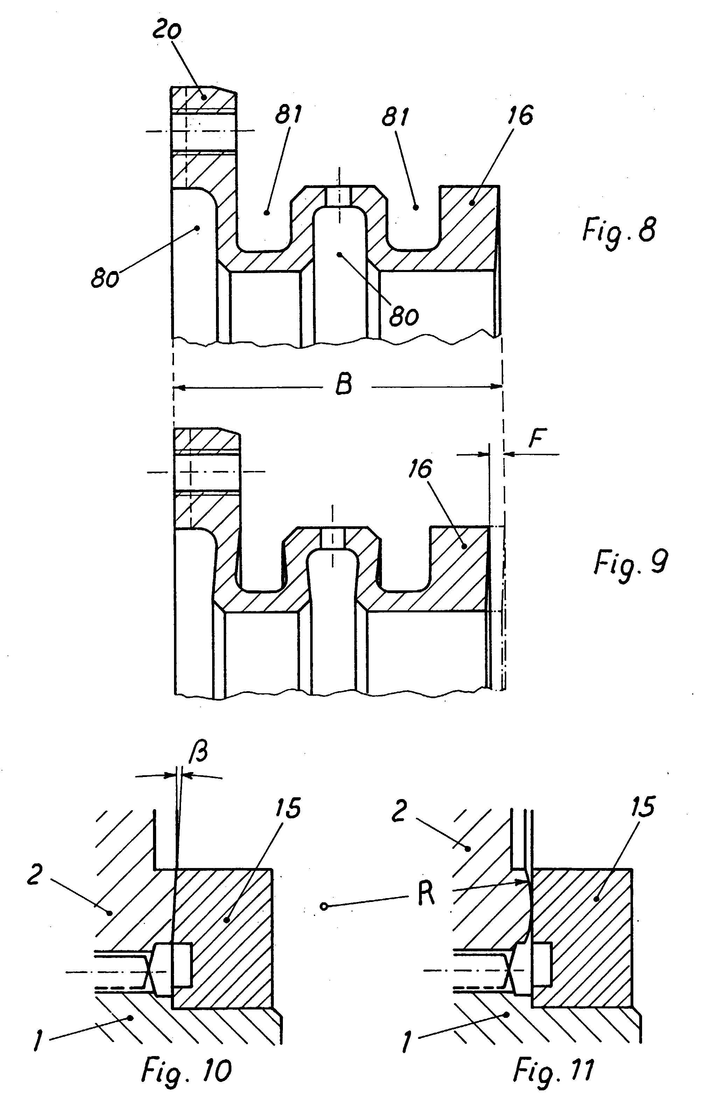

Fig. 7 zeigt in vergrößerter Darstellung die erfindungsgemäße, bei allen vorgenannten Bauarten gleiche Ausführung der getrennten Befestigung von Hohlrad 3 und Druckring 16 an dem gemeinsamen Anbauteil, d.h. Flansch 41 nach Fig. 2, Gehäusewand 19 nach Fig. 1 oder Zwischenhülse 52 nach Fig. 3. Als Befestigungselemente können einfache Schrauben eingesetzt werden.

Fig. 8 zeigt in vergrößerter Darstellung die erfindungsgemäß elastische Ausbildung des Hohlrad-Druckringes 16 für die Verbesserung des axialen Lastausgleichs bei herstellungsbedingten Breitenunterschieden der Planetenräder 2. Die Federung des Druckringes 16 unter der Belastung durch axiale Zahnkräfte wird durch innere Ausnehmungen 80 und äußere Ausnehmungen 81 erreicht. Das Maß "B" zeigt die Druckringbreite in unbelastetem Zustand.

Fig. 9 stellt den Druckring 16 nach Fig. 8 in belastetem Zustand dar, wobei eine Einfederung um den Betrag "F" stattgefunden hat. Durch die elastische Ausbildung des Druckringes wird nicht nur ein vollkommener Ausgleich der axialen Zahnkräfte auch bei mehr als drei Planetenrädern 2, sondern zudem noch bei konischen Berührungsflächen eine gleichmäßige Lastverteilung entlang der radial verlaufenden Berührlinie erreicht. Hierdurch wird schädliche Kantenpressung vermieden. Der axial elastische Druckring 16 macht es darüber hinaus auch möglich, daß von den bekannten Druckringgeometrien konisch/konisch und plan/ballig beide alternativ verwendet werden können.

Fig. 10 stellt die Druckringgeometrie konisch/konisch mit dem Kegelwinkel β der Berührflächen am Beispiel des sonnenrad-Druckringes 15 dar. Hieraus ergibt sich eine radial verlaufende Gerade als Berührungslinie.

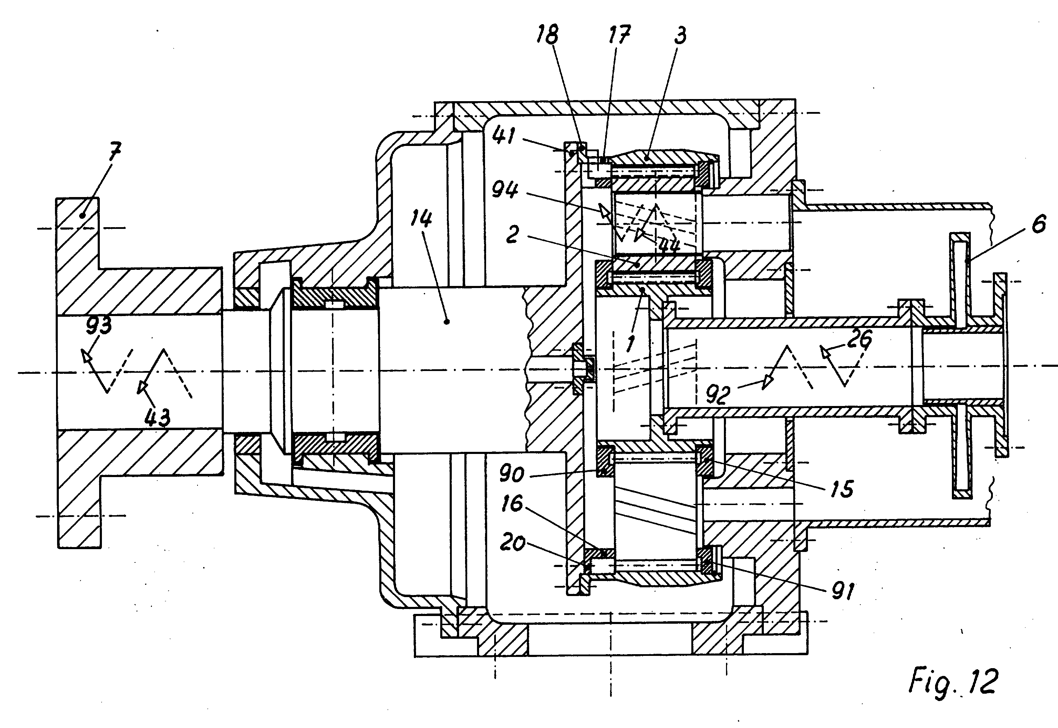

Fig. 11 zeigt die Geometrie plan/ballig mit dem Radius R für die Balligkeit an den Planetenrädern 2. Die Berührungslinie ist hier ein Kreisbogen.

Durch die erfindungsgemäße elastische Ausbildung des Hohlrad-Druckringes 16 ist es nunmehr möglich, die Balligkeit - nicht wie bisher - den Druckringen, sondern den Planetenrädern 2 trotz vorhandener Breitenunterschiede zuzuordnen. Dies führt zu einer einfacheren und präziseren Herstellung sowohl der balligen als auch der planen Berührungsflächen.

In Fig. 12 ist eine Ausführungsform eines Stirnräderplanetengetriebes der Bauart nach Fig. 2, jedoch mit beiderseits der Verzahnungen des Sonnenrades 1 und des Hohlrades 3 angeordneten Druckringen 15 und 90 bzw. 16 und 91, dargestellt. Diese vier Druckringe erlauben den Betrieb derartiger Getriebe in beiden Drehrichtungen analog der Pfeile 26, 43, 44 bzw. 92, 93 und 94. Diese Bauart enthält außerdem die folgenden gleichen erfindungsgemäßen Merkmale wie die anderen Ausführungsformen nach Fig. 1 bis 3, nämlich:
1. Befestigung des Hohlrades 3 über den Flansch 18, getrennt zum Druckring 16 an dem gemeinsamen Anbauteil, d.h. dem Flansch 41.
2. Verbesserung des radialen Lastausgleichs durch Einstellen eines Gleichgewichts der eine starre Baueinheit bildenden Teile, nämlich flexible Kupplung 7, langsam laufende Getriebewelle 14, Flansch 41, Hohlrad 3 und Druckring 16.

Eine weitere Ausführungsmöglichkeit der vorliegenden Erfindung besteht darin, eine starre Verbindung der langsam laufenden Getriebewelle 14 mit der zu kuppelnden Maschine durch Wegfall der flexiblen Kupplung 7 zu schaffen. Hierbei ist es erforderlich, bei dem Lager 13 das radiale und axiale Lagerspiel so zu vergrößern, daß bei zentrischer Lagerausrichtung keine radiale Abstützung und axiale Führung der Welle 14 stattfinden kann. Diese Maßnahme gewährleistet einen guten radialen Lastausgleich. Das Lager 13 dient somit nur noch dem Zweck, die Ölzuführung in die Welle 14 zur Schmierung des Radsatzes und die Wellenabstützung bei Getriebemontage zu erreichen.

## Patentansprüche

1. Stirnräderplanetengetriebe mit feststehendem Planetenträger oder mit feststehendem Hohlrad oder mit feststehendem Sonnenrad, mit Planetenrädern, Einfachschrägverzahnung und Druckringen, welche an Verzahnungsenden des Sonnenrades und des mit hülsenartigem Fortsatz versehenen Hohlrades direkt starr angeordnet sind, und mit einer langsam laufenden und einer schnell laufenden Welle,
dadurch gekennzeichnet,
dass jeweils nur an einem durch die Schrägungsrichtung der Verzahnung und die einzig zulässige Antriebsdrehrichtung bestimmten Verzahnungsende des Sonnenrades (1) und des Hohlrades (3) ein Druckring (15, 16) für den Ausgleich der axialen Zahnkräfte und die axiale Radsatzführung angeordnet ist,
wobei sich der Druckring (16) des Hohlrades (3) und der Druckring (15) des Sonnenrades (1) diagonal gegenüberliegen,
dass das Hohlrad (3) und dessen Druckring (16) getrennt voneinander ausgebildet sind und
dass der Druckring (16) des Hohlrades (3) von einem hülsenförmigen Fortsatz (17) des Hohlrades (3) umschlossen wird und sowohl dieser Fortsatz (17) als auch der Druckring (16) über jeweils einen Flansch (18, 20) radial unmittelbar benachbart an derselben Wand eines weiteren Getriebebauteils (19;41;52,53) befestigt sind.

2. Getriebe nach Anspruch 1,
dadurch gekennzeichnet,
dass das weitere Getriebebauteil das feststehende Getriebegehäuse (19) darstellt (Fig. 1).

3. Getriebe nach einem der vorhergehenden Ansprüche, mit radialer Zentrierung der Planetenräder (2) bzw. der langsam laufenden Welle (14) an dem feststehenden Hohlrad (3) und mit einem Lager (13) für die langsam laufende Welle (14),
dadurch gekennzeichnet,
dass die Schwerpunktabstände (L₁, L₂) für beiderseits des Lagers (13) angeordnete Massen (M₁, M₂) so gewählt sind, dass sich eine aus der langsam laufenden Welle (14), einer dieser Welle (14) zugeordneten halben flexiblen Wellenkupplung (7), dem Planetenträger (4) und den Lagerbolzen (14) für die Planetenräder (3) bestehende Baueinheit annähernd im Gleichgewicht um einen Punkt (32) des Lagers (13) befindet.

4. Getriebe nach Anspruch 1 mit drehendem Hohlrad (3) und feststehendem Planetenträger (40),
dadurch gekennzeichnet,
dass die Wand des weiteren Getriebebauteils als Flansch (41) der langsam laufenden Welle (14) ausgebildet ist (Fig. 2).

5. Getriebe nach Anspruch 4,
dadurch gekennzeichnet,
dass die Schwerpunktabstände (L₁, L₂) für beiderseits eines Lagers (13) für die langsam laufende Welle (14) angeordnete Massen (M₁, M₂) so gewählt sind, dass sich eine aus der langsam laufenden Welle (14) mit ihrem Flansch (41), einer dieser Welle (14) zugeordneten halben flexiblen Wellenkupplung (7), dem Hohlrad (3) und dem Druckring (16) bestehende Baueinheit annähernd im Gleichgewicht um einen Punkt (32) des Lagers (13) befindet.

6. Getriebe nach Anspruch 1, mit feststehendem Sonnenrad (1), welches über einen hülsenförmigen Fortsatz (50) und einen Flansch (51) mit einem Getriebegehäuseteil (11) verbunden ist und mit drehendem Hohlrad (3),
dadurch gekennzeichnet,
dass die Wand des weiteren Getriebebauteils als Flansch einer mit einem Flansch (53) der schnell laufenden Welle (54) starr verbundenen Zwischenhülse (52) ausgebildet ist (Fig. 3).

7. Getriebe nach Anspruch 6 und einem der vorhergehenden Ansprüche,
dadurch gekennzeichnet,
dass die Schwerpunktabstände (L₃, L₄) für beiderseits eines Lagers (56) der schnell laufenden Welle (54) angeordnete Massen (M₃, M₄) so gewählt sind, dass sich eine aus der schnell laufenden Welle (54) mit ihrem Flansch (53), einer dieser Welle (54) zugeordneten flexiblen Kupplung (6), der Zwischenhülse (52), dem Hohlrad (3) und dem Druckring (16) bestehende Baueinheit annähernd im Gleichgewicht um einen Punkt (80) des Lagers (56) befindet.

8. Getriebe nach einem der vorhergehenden Ansprüche,
dadurch gekennzeichnet,
dass der Druckring (16) des Hohlrades (3) zum axialen Lastausgleich federnd ausgebildet ist.

9. Stirnräderplanetengetriebe der Bauarten mit feststehendem Planetenträger oder mit feststehendem Hohlrad oder mit feststehendem Sonnenrad,
mit Planetenrädern, Einfachschrägverzahnung und Druckringen, welche an Verzahnungsenden des Sonnenrades und des mit hülsenartigem Fortsatz versehenen Hohlrades direkt starr befestigt sind, und mit einer langsam laufenden und einer schnell laufenden Welle,
sowie mit beiderseits der Verzahnung des Sonnenrades (1) und des Hohlrades (3) angeordneten Druckringen (15, 90; 16, 91) und Betrieb des Getriebes in beiden Drehrichtungen,
dadurch gekennzeichnet,
dass der Druckring (16) des Hohlrades (3) von einem hülsenförmigen Fortsatz (17) des Hohlrades (3) umschlossen wird und sowohl dieser Fortsatz (17) als auch der Druckring (16) über jeweils einen Flansch (18, 20) radial unmittelbar benachbart an derselben Wand eines weiteren Getriebebauteils (19;41;52,53) befestigt sind,
und dass die rotierenden Getriebeteile starre Baueinheiten bildenden flexiblen Kupplungen für radialen Lastausgleich im Gleichgewicht sind.

## Claims

1. A planetary spur gear transmission with a fixed pinion cage or with a fixed ring gear or with a fixed sun wheel, with planet wheels, single helical gearing and pressure rings which are arranged rigidly directly on tooth ends of the sun wheel and of the ring gear provided with a sleeve-like extension, and with a low-speed and a high-speed shaft,
characterised in that
a pressure ring (15, 16) for compensating for the axial tooth forces and for axial wheelset guidance is arranged in each case only on one end of the teeth of the sun wheel (1) and of the ring gear (3) which is determined by the direction of skew of the teeth and the sole permissible direction of rotation of the drive,
the pressure ring (16) of the ring gear (3) and the pressure ring (15) of the sun wheel (1) being located diagonally opposite one another,
the ring gear (3) and the pressure ring (16) thereof are formed separately from each other, and
the pressure ring (16) of the ring gear (3) is surrounded by a sleeve-like extension (17) of the ring gear (3) and both this extension (17) and the pressure ring (16), are fastened, each via a flange (18, 20), radially directly adjacent to each other to the same wall of an additional transmission component (19; 41; 52, 53).

2. A transmission according to Claim 1, characterised in that the additional transmission component is the fixed transmission casing (19) (Fig. 1).

3. A transmission according to one of the preceding claims, with radial centring of the planet wheels (2) or of the low-speed shaft (14) on the fixed ring gear (3) and with a bearing (13) for the low-speed shaft (14),
characterised in that
the distances (L₁, L₂) between centres of gravity for masses (M₁, M₂) located on either side of the bearing (13) are selected such that a structural unit consisting of the low-speed shaft (14), a flexible half shaft coupling (7) associated with this shaft (14), the pinion cage (4) and the bearing pin (14) [sic] for the planet wheels (3) is located approximately in equilibrium about a point (32) of the bearing (13).

4. A transmission according to Claim 1, with a rotating ring gear (3) and a fixed pinion cage (40), characterised in that the wall of the additional transmission component is designed as a flange (41) of the low-speed shaft (14) (Fig. 2).

5. A transmission according to Claim 4, characterised in that the distances (L₁, L₂) between centres of gravity for the masses (M₁, M₂) located on either side of a bearing (13) for the low-speed shaft (14) are selected such that a structural unit consisting of the low-speed shaft (14) with its flange (41), a flexible half shaft coupling (7) associated with this shaft (14), the ring gear (3) and the pressure ring (16) is located approximately in equilibrium about a point (32) of the bearing (13).

6. A transmission according to Claim 1, with a fixed sun wheel (1) which is connected via a sleeve-like extension (50) and a flange (51) to a transmission casing component (11), and with a rotating ring gear (3), characterised in that the wall of the additional transmission component is designed as a flange of an intermediate sleeve (52) rigidly connected to a flange (53) of the high-speed shaft (54) (Fig. 3).

7. A transmission according to Claim 6 and one of the preceding claims, characterised in that the distances (L₃, L₄) between centres of gravity for masses (M₃, M₄) located on either side of a bearing (56) for the high-speed shaft (54) are selected such that a structural unit consisting of the high-speed shaft (54) with its flange (53), a flexible coupling (6) associated with this shaft (54), the intermediate sleeve (52), the ring gear (3) and the pressure ring (16) is located approximately in equilibrium about a point (80) of the bearing (56).

8. A transmission according to one of the preceding claims, characterised in that the pressure ring (16) of the ring gear (3) is made resiliently for axial load compensation.

9. A planetary spur gear transmission of the types with a fixed pinion cage or with a fixed ring gear or with a fixed sun wheel,
with planet wheels, single helical gearing and pressure rings which are arranged rigidly directly on ends of the teeth of the sun wheel and of the ring gear provided with a sleeve-like extension, and with a low-speed and a high-speed shaft,
and also with pressure rings (15, 90; 16, 91) arranged on either side of the teeth of the sun wheel (1) and the ring gear (3) and operation of the transmission in both directions of rotation,
characterised in that the pressure ring (16) of the ring gear (3) is surrounded by a sleeve-like extension (17) of the ring gear (3) and both this extension (17) and the pressure ring (16) are fastened, each via a flange (18, 20), radially directly adjacent to each other to the same wall of an additional transmission component (19; 41; 52, 53),
and that the rotating transmission parts are flexible couplings for radial load compensation in equilibrium which form rigid structural units.

## Revendications

1. Transmission épicycloïdale à pignons droits comprenant un porte-satellites fixe, une couronne fixe ou une roue planétaire fixe, des pignons satellites, une denture oblique simple, des bagues de pression qui sont montées fixes directement aux extrémités des dentures de la roue planétaire et de la couronne munie d'un prolongement en forme de manchon, ainsi qu'un arbre à rotation lente et un arbre à rotation rapide,
caractérisée en ce que
une bague de pression (15, 16) destinée à la compensation des forces axiales des dentures et au guidage axial des jeux de pignons est prévue seulement à une extrémité de denture de la roue planétaire (1) et de la couronne (3), qui est déterminée par le sens d'inclinaison de la denture et par l'unique sens de rotation admissible,
la bague de pression (16) de la couronne (3) et la bague de pression (15) de la roue planétaire (1) étant opposées en diagonale,
en ce que la couronne (3) et sa bague de pression (16) sont formées séparément l'une de l'autre, et
en ce que la bague de pression (16) de la couronne (3) est entourée par un prolongement (17) en forme de manchon de la couronne (3) et ce prolongement (17) et la bague de pression (16) sont tous deux fixés à la même paroi d'une autre partie (19 ; 41 ; 52, 53) de la transmission, chacun par une bride (18, 20), dans des positions immédiatement adjacentes dans la direction radiale.

2. Transmission selon la revendication 1,
caractérisée
en ce que l'autre composant de la transmission représente le carter fixe (19) de la transmission (Fig. 1).

3. Transmission selon une des revendications précédentes, comprenant un centrage radial des pignons satellites (2) ou de l'arbre à rotation lente (14) par rapport à la couronne fixe (3) et un palier (13) pour l'arbre à rotation lente (14),
caractérisée
en ce que les distances des centres de gravité (L₁, L₂) des masses (M₁, M₂) disposées de part et d'autre du palier (13) sont choisies de manière qu'une unité composée de l'arbre à rotation lente (14), d'un demi-accouplement d'arbre flexible (7) associé à cet arbre (14), du porte-satellites (4) et des axes de portée (14) des pignons satellites (3) soit à peu prés en équilibre autour d'un point (32) du palier (13).

4. Transmission selon la revendication 1, comprenant une couronne rotative (3) et un porte-satellites fixe (40),
caractérisée
en ce que la paroi de l'autre composant de la transmission est constituée par un flasque (41) de l'arbre à rotation lente (14) (Fig. 2).

5. Transmission selon la revendication 4,
caractérisée
en ce que les distances des centres de gravité (L₁, L₂) des masses (M₁, M₂) disposées de part et d'autre d'un palier (13) recevant l'arbre à rotation lente (14) sont choisies de manière qu'un composant composé de l'arbre à rotation lente (14), avec son flasque (41), d'un demi-accouplement d'arbre flexible (7) associé à cet arbre (14), de la couronne (3) et de la bague de pression (16) se trouve à peu près en équilibre autour d'un point (32) du palier (13).

6. Transmission selon la revendication 1, comprenant une roue planétaire fixe (1), qui est assemblée à une partie (11) du carter de la transmission par un prolongement (50) en forme de manchon et un flasque (51), et comprenant une couronne rotative (3),
caractérisée
en ce que la paroi de l'autre élément de la transmission est constituée par une bride d'un manchon intermédiaire (52) assemblé rigidement à un flasque (53) de l'arbre à rotation rapide (54) (Fig. 3).

7. Transmission selon la revendication 6 et une des revendications précédentes,
caractérisée
en ce que les distances des centres de gravité (L₃, L₄) des masses (M₃, M₄) disposées de part et d'autre d'un palier (56) de l'arbre à rotation rapide (54), sont choisies de manière qu'un composant composé de l'arbre à rotation rapide (54), avec son flasque (53), d'un accouplement flexible (6) associé à cet arbre (54), du manchon intermédiaire (52), de la couronne (3) et de la bague de pression (16) se trouve à peu près en équilibre autour d'un point (80) du palier (56).

8. Transmission selon une des revendications précédentes,
caractérisée
en ce que la bague de pression (16) de la couronne (3) servant pour la compensation de la charge axiale est de constitution élastique.

9. Transmission épicycloïdale à roues droites du type de construction comprenant un porte-satellites fixe, une couronne fixe ou une roue planétaire fixe,
comprenant des pignons satellites, une denture oblique simple et des bagues de pression qui sont montées fixes directement à des extrémités des dentures de la roue planétaire et de la couronne munie du prolongement en forme de manchon, un arbre à rotation lente et un arbre à rotation rapide, ainsi que des bagues de pression (15, 90 ; 16, 91) disposées de part et d'autre de la denture de la roue planétaire (1) et de la couronne (3), avec fonctionnement de la transmission dans les deux sens de rotation,
caractérisée
en ce que la bague de pression (16) de la couronne (3) est entourée par un prolongement en forme de manchon (17) de la couronne (3), et ce prolongement (17) et la bague de pression (16) sont tous deux fixés à la même paroi d'un autre composant (19 ; 41 ; 52, 53) de la transmission, chacun par une bride (18, 20) dans des positions immédiatement adjacentes dans la direction radiale, et
en ce que les éléments rotatifs de la transmission et des accouplements flexibles formant des composants fixes sont en équilibre pour la compensation radiale des charges.
